# EUROPEAN PATENT SPECIFICATION

(11) **EP 2 243 623 B1**
(45) Date of publication and mention of the grant of the patent: **03.07.2013**
(21) Application number: 09705745.9
(22) Date of filing: 26.01.2009
(51) Int. Cl.: B29D 30/32, B29D 30/26

(54) **TIRE SHAPING APPARATUS**
REIFENFORMUNGSGERÄT
APPAREIL DE FAÇONNAGE DE PNEU

(30) Priority: 28.01.2008 JP 2008016612; 05.12.2008 JP 2008310815
(43) Date of publication of application: 27.10.2010
(73) Proprietor: Bridgestone Corporation, Tokyo 104-8340 (JP)
(72) Inventor: IWASAKI, Yoshio, Kodaira-shi Tokyo 187-8531 (JP); ONUKI, Hideyasu, Kodaira-shi Tokyo 187-8531 (JP); KANZAWA, Satoshi, Kodaira-shi Tokyo 187-8531 (JP)
(74) Representative: Waldren, Robin Michael
(86) International application number: PCT/JP2009/051189
(87) International publication number: WO 2009/096357

(56) References cited:
- WO-A1-2004/069528
- WO-A2-2005/118270
- JP-A- 2004 268 371
- US-A- 4 131 500
- US-A1- 2002 104 620
- US-A1- 2007 068 631
- US-B1- 6 318 434

## Description

### Technical Field

The present invention relates to a tire shaping apparatus equipped with a folding mechanism which folds a carcass band on the periphery of bead.

### Background Art

When shaping a green tire by a tire shaping apparatus, beads are fitted on the circumferences of the both end portions of a carcass band which is formed in a cylindrical shape. The beads are supported from the inner periphery side of the carcass band by a pair of movable units capable of approaching to and moving away from the carcass band in the axial direction of the spindle composing the shaping dram (width direction of a concerned tire to be shaped). Here, a bladder made of elastic material such as rubber is fitted between both the movable units and the carcass band is disposed on the circumference side of the bladder. Next, compressed air is supplied to the inside of the bladder so that the bladder comes into tight contact with the inner periphery of the carcass band. While the central part in the drum spindle direction of the carcass band is inflated to expand the diameter by means of the bladder, both bead portions of the carcass band are moved in the direction approaching with each other by the both movable units. Meanwhile folding mechanisms attached to the both movable units are swung from the closed position where the leading end of the folding mechanism directs inward to the expanded open position where the leading end of the folding mechanism directs in the direction moving away from the spindle (outward radial direction of tire), so that the both end portions of the carcass band (outside of the both bead portions in an axial direction) are folded onto the bead peripheries by the folding rollers provided at the leading ends of the folding mechanism. Subsequently, a belt tread band, which has been processed to form a ring-shape, is fitted on the external surface of the carcass band, thus completing a green tire.

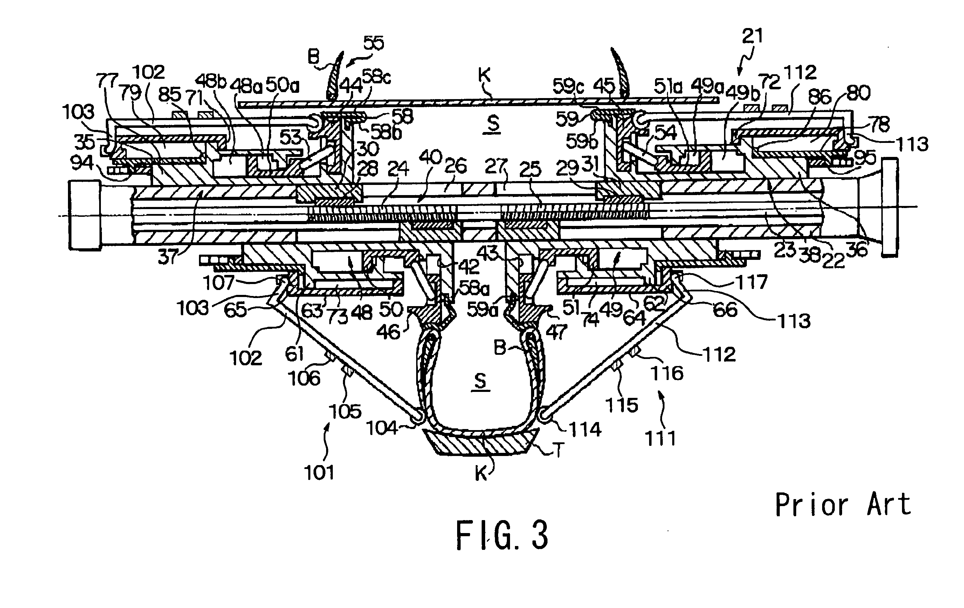

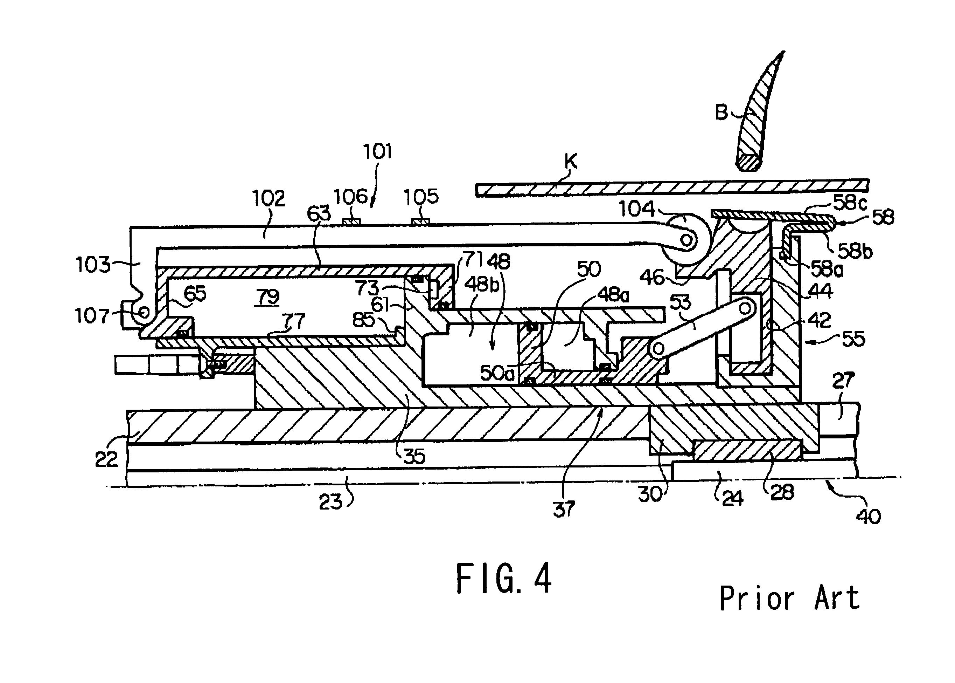

Fig. 3 shows a front sectional view of a conventional tire shaping apparatus (see patent document 1) and Fig. 4 shows a front sectional view of the vicinity of a bead lock segment in the tire shaping apparatus of Fig. 3. In Fig. 3, the upper half shows the state where the folding mechanism is in a closed position, and the lower half shows the state in an expanded open position.

In Figs. 3 and 4, a tire shaping drum 21 is provided with a horizontal drum spindle 22 in a cylindrical shape. This drum spindle 22 is connected to a driving portion of the tire shaping apparatus (not shown in the drawing) and can rotate around the axis by the driving portion.

A screw shaft 23 coaxial with the drum spindle 22 is inserted inside of the drum spindle 22 in a rotatable manner, and the circumferences of the screw shaft 23 on the both sides thereof in an axial direction are provided with external threads 24, 25, threaded reversely to each other. A plurality of slits 26, 27 are provided to extend in the axial direction on the drum spindle 22 in portions overlapping the external threads 24, 25, respectively. These slits 26, 27 are arranged in plural numbers so as to be away from each other by equal distance in a circumference direction. Nuts 28, 29 threadably fit the external threads 24, 25, respectively and are fixed with connecting blocks 30, 31 which pass through the slits 26, 27, respectively.

At the both side portions of the drum spindle 22 in the axis direction, substantially cylinder-shaped sliding bodies 35, 36 are provided, which surround the drum spindle 22 and are supported movably in the axial direction. The inner end portions of these sliding bodies 35, 36 in the axial direction are connected with the connecting blocks 30, 31 respectively. Aforementioned connecting blocks 30, 31 and the sliding bodies 35, 36 compose, as a whole, a pair of movable units 37, 38 which are supported movably by both side portions of the drum spindle 22 in the axial direction.

These movable units 37, 38 move in reverse direction by equal distance to approach to or move away from each other by the external threads 24, 25, threaded reversely, when the screw shaft 23 is driven to rotate by the driving portion of the tire shaping apparatus. Aforementioned screw shaft 23, nuts 28, 29 compose as a whole a means 40 for approaching and moving away the movable units 37, 38 by moving them in opposite directions with equal distance.

A plurality of storage recesses 42, 43 is provided at the axially inner end portions of the sliding bodies 35, 36 extending in radial direction of the sliding bodies 35, 36 respectively, these storage recesses 42, 43 being arranged with equal intervals in a circumferential direction. Bead lock segments 44, 45 are inserted and supported in the storage recesses 42, 43 of each sliding body 35, 36 (movable body 37, 38) movably in the radial direction, and finger receivers 46, 47 which protrude outwardly in the axial direction are formed at the outer end portion in the radial direction, respectively. In each finger receiver 46, 47, the leading end of a folding finger (described later), specifically a folding roller, is disposed and at that time the outer end of the folding roller in the radial direction is positioned at the substantially same radial position as the outer end of the bead lock segment 44, 45 in the radial direction.

Ring-shaped cylinder chambers 48, 49 are formed in the sliding bodies 35, 36, and in cylinder chambers 48, 49 ring-shaped pistons 50, 51, respectively, are stored movably in the axial direction, which separate the cylinder chambers 48, 49 into inner chambers 48a, 49a and outer chambers 48b, 49b. These pistons 50, 51 are provided with extension portions 50a, 50b being formed integrally, which extend inwardly in the axial direction penetrating the internal wall of the cylinder chambers 48, 49 in the axial direction. A plurality of links 53, 54 are provided, one end of each link is connected with the bead lock segments 44, 45, the other end thereof is connected with the axially-inward end portion of the extension portions 50a, 51a respectively in a rotatable manner. These links 53, 54 are inclined so as to open inward in the axial direction.

When high pressure fluid is supplied from a fluid source (not shown) to each inner chamber 48a, 49a of each cylinder chamber 48, 49, the piston 50, 51 moves outward in the axial direction to move the bead lock segment 44, 45 inward in the radial direction. On the contrary, when high pressure fluid is supplied to the outer chamber 48b, 49b, the piston 50, 51 moves inward in the axial direction to move the bead lock segment 44, 45 outward in the radial direction. Aforementioned pistons 50, 51 and the links 53, 54 compose, as a whole, an expansion-contraction means 55 which expands and contracts the bead lock segments 44, 45 in the radial direction through synchronous movement.

Sealing members 58, 59 are a pair of sealing members made of rubber coated cord fabric, and these sealing members 58, 59 seal the gap between a carcass band K (described later) and the movable units 37, 38 and the bead lock segments 44, 45 when the carcass band K is supported from inward in the radial direction by the bead lock segments 44, 45, outside of which has been enlarged by the expansion-contraction means 55.

The sealing members 58, 59 have base end portions 58a, 59a which are fixed air-tightly at the upper end portion of axially inner portion than the bead lock segments 44, 45 of the movable units 37, 38 (sliding bodies 35, 36). Inward extension portions 58b, 59b which have cylindrical shape extend axially inward from the outward ends in the radial direction of these base ends portions 58a, 59a. In addition, at the axially inward end of the inward extension portions 58b, 59b, outward extension portions 58c, 59c having cylindrical shape with broader width than the inward extension portions 58b, 59b, are elongated, and these outward extension portions 58c, 59c extend outward in the radial direction of the inward extension portions 58b, 59b, being overlapped in axially outward direction.

Flanges 61, 62, respectively, are formed on the external surface of movable units 37, 38, specifically sliding bodies 35, 36, at the central part in the axial direction, and cylinder bodies 63, 64, respectively, are fitted movably in the axial direction on the outside of these flanges 61, 62. Flanges 65, 66 are formed integrally on the inner surface of the cylinder bodies 63, 64 at the axially outward ends, and base end portions (axially outward portions) of a plurality of folding fingers 101, 111, which are provided apart from each other at equal angle pitch in a circumferential direction, are connected with these flanges 65, 66 in a swingable manner with the swinging shafts 107, 117 as fulcrums (swinging center).

The folding fingers 101, 111 are configured to be generally L-shaped in the front view with horizontal fingers 102, 112, the leading end of which directs axially inward (axially central side) of the drum spindle 22 in a closed position, and supporting fingers 103, 113 extending substantially perpendicular to the axial direction from the base end portion of the horizontal fingers 102, 112. In addition, folding rollers 104, 114 are fitted in a rotatable manner at the leading ends of the horizontal fingers 102, 112, respectively. Further, returning members 105, 106, 115 and 116 , which are made of elastic material such as rubber band, are fitted in central part of the horizontal fingers 102, 112, surrounding the horizontal fingers 102, 112 from the circumference. Since the folding mechanisms are arranged in plural numbers (for example, 40 pieces) with equal angle pitches in the circumference direction, the returning members 105, 106, 115 and 116 restrict the horizontal fingers of those folding mechanisms just as a bundle. Outside of the folding fingers 101, 111 in the tire radial direction, the carcass band K is disposed, and outside of which beads B with filler made of bead core and bead filler are disposed.

On the inner surface of the axially inward end portion of aforementioned cylinder bodies 63, 64, integrally-formed ring-shaped flanges 71, 72 are provided, respectively. These flanges 71, 72 slide in contact with positions axially more inward than the flanges 61, 62 of the sliding bodies 35, 36. When high pressure fluid is supplied into inner cylinder chambers 73, 74 which are formed between aforementioned flanges 61, 62 and flanges 71, 72 from a fluid source (not shown), the cylinder bodies 63, 64 move axially inward. At that time, the folding fingers 101, 111 expand while moving axially inward together with the cylinder bodies 63, 64 so that the carcass band K lying axially more outside than the beads B equipped with filler is folded around the beads B equipped with filler.

Stopper bodies 77, 78 are the cylinder-shaped stopper bodies which are engaged with the outside surface of the axially more outward part than the flanges 61, 62 of the sliding bodies 35, 36. On the circumferences of the cylinder-shaped stopper bodies, the flanges 65, 66 are engaged in a slidable manner. When high pressure fluid is supplied from the fluid source into outer cylinder chambers 79, 80, which are formed between the flange 61, 62 and the flange 65, 66, the folding fingers 101, 111 move axially outward together with the cylinder bodies 63, 64 while closing.

Protruded flange-shaped stoppers85, 86 are integrally formed at the axially inward ends of the stopper bodies 77, 78 respectively, directing outward in the radial direction. These stoppers 85, 86 determine the inward movement limit to stop the movement of the cylinder bodies 63, 64, when the flanges 65, 66 move axially inward to come into contact with the stopper.

Then, operational sequence of the tire shaping apparatus with such constitution as described above will be explained. When a raw tire is shaped using aforementioned tire shaping apparatus 21, firstly, carcass band K which consists of inner liner that has been configured to be cylinder shaped by another shaping drum, carcass plies and the like, a beads B equipped with filler, and a belt tread band T are transported to outside of the tire shaping drum 21 by a transporting apparatus, and are engaged thereon.

Then , high pressure fluid is supplied into the outer chamber 48b, 49b of the cylinder chamber 48, 49 so that the pistons 50, 51 move axially inward. Meantime, since the bead lock segments 44, 45, respectively, are connected with the pistons 50, 51 via links 53, 54, each bead lock segment 44, 45 move outward in the tire radial direction to have bigger diameter, while being guided by the storage hole 42, 43, and the carcass band K and the beads B equipped with filler are supported from the inside of tire radial direction via outward extension portion 58c, 59c of the sealing member 58, 59.

At that time, since the folding rollers 104, 114 of the folding fingers 101,111, respectively, are disposed on the finger receivers 46, 47 of the bead lock segments 44, 45, each folding roller 104, 114 moves radially outward by the same distance together with the bead lock segment 44, 45 and the folding finger 101, 111 swing slightly in opening direction. Consequently, the carcass band K positioning axially more outward than the bead B equipped with filler is always supported from radially inward side, hence the bead lock segment 44, 45 is prevented from falling down along the axially outward end face of the bead lock segment 44, 45, to generate steps.

Then, while air is supplied into a space S enclosed by the carcass band K between the sliding bodies 35, 36 and the beads B equipped with filler, the screw shaft 23 is rotated so that the movable units 37, 38, bead lock segments 44, 45 and the folding fingers 101, 111 are integrally moved axially inward by the external threads 24, 25 to approach each other, and thereby the carcass band K between the beads B equipped with filler is gradually transformed into a toroidal-shape. When the movable units 37, 38 move axially inward to the predetermined position, rotation of the screw shaft 23 is stopped but the air is supplied into the space S successively even after the stoppage of the rotation. Whereby, the carcass band K, which is on a way of transformation into a toroidal-shape, touches the belt tread band T so that the central part thereof in the axial direction comes into contact tightly with the inner periphery of the belt tread band T. Meantime, the inner pressure of the space S is maintained by the sealing members 58, 59.

Then, high pressure fluid is supplied into the inner cylinder chambers 73, 74 so that the cylinder bodies 63, 64 and the folding fingers 101, 111 move axially inward. At that moment, since each folding roller 104, 114 abut against the bead B equipped with filler, which extends substantially in the radial direction, the folding roller 104, 114 move substantially outward in the radial direction along the outside surface of the beads B equipped with filler, and the carcass band K which lies axially more outward than the beads B equipped with filler is folded outward in the radial direction along the beads B equipped with filler. Due to such outward movement in radial direction of the folding roller 104, 114, the folding finger 101, 111 swings in expanding direction synchronously.

Thereafter, when the carcass band K lying axially more outward than the beads B equipped with filler is completely folded by the folding roller 104, 114 of the folding finger 101, 111 which swings in the expanding direction, the flange 65, 66 of the cylinder body 63, 64 abuts against the stopper 85, 86 of the stopping body 77, 78, and thereby inward movement of the cylinder body 63, 64 in the axial direction is stopped. The state of this stage is shown in the lower half of Fig. 3.

Next, high pressure fluid is supplied to the outer cylinder chambers 79, 80 so that each cylinder body 63, 64 and each folding finger 101, 111 are moved axially outward until the flange 71, 72 abuts against the flange 61, 62. Meanwhile, the folding finger 101, 111 swings in the closing direction until the folding roller 104, 114 is disposed on the finger receiver 46, 47 by elastic restoring force of the returning members 5, 6, 15, and 16.

Then, the belt tread band T is pressed tightly onto the carcass band K via stitching process by a stitching apparatus, which is not shown, while the drum spindle 22 is kept to rotate, and thus a raw tire is obtained. Subsequently, after the raw tire is grasped at the outside thereof in the radial direction by a transportation device, which is not shown, air is discharged from the space S and high pressure fluid is supplied to the inner chamber 48a, 49a of the cylinder chamber 48, 49 so that the bead lock segment 44, 45 is moved radially inward and the raw tire is handed over from the bead lock segment 44, 45 to the transportation device. At that time, since the outside surface of the leading end portion of outward extension portion 58c, 59c is subjected to anti-sticking treatment, the outward extension portion 58c, 59c of the sealing member 58, 59 can be removed from the carcass band K (raw tire) easily.

Then, the raw tire is carried out from the tire shaping drum 21 by the transportation device and the screw shaft 23 is rotated in reverse direction against the direction described previously so that the movable unit 37, 38, the bead lock segment 44, 45 and the folding finger 101, 111 are returned to the original positions.

The folding mechanism, however, may produce unevenness on the tire as a product, because pressing condition against the carcass band K varies depending on the area where the folding rollers 104, 114 come into contact with the carcass band K or not.

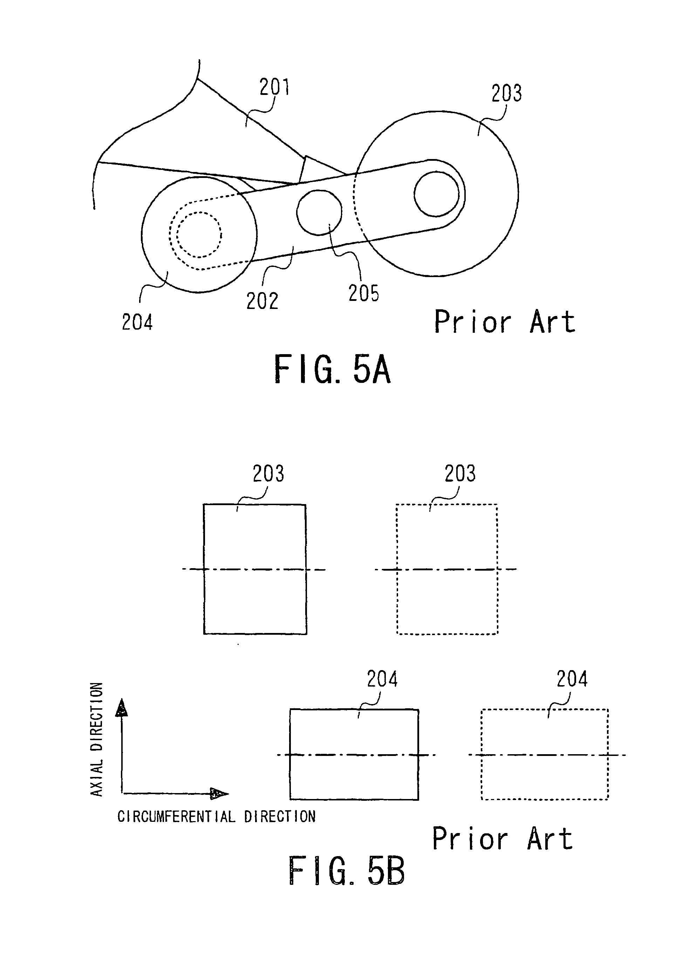

Hence, although it is not mentioned in a document, such a folding mechanism has been devised as two folding rollers 203 and 204 are provided on each folding finger 201, as shown in Fig. 5, so that folding with even thrust condition is achieved through overlapping the thrust positions of the folding rollers against the circumferential direction of the carcass band K.

As shown in Fig. 5(a), the swinging member 202 is fitted to the folding finger 201 via a swinging shaft 205, to the both ends of which the folding rollers 203 and 204 are attached rotatably. The folding roller 203 is equivalent to the conventional folding rollers 104, 114. As shown in Fig. 5(b), the folding roller 204 is located in a deviated position from the folding roller 203 in the axial direction (front and rear) and in the circumferential direction (left and right) of the drum spindle. And as for the meridian direction of the carcass band K, the folding roller 203 touches firstly the carcass band and as for the circumferential direction, respective parts of the contacting position are overlapped. In addition, contacting positions of the folding rollers fitted on the adjacent folding fingers 201 are overlapped partially as well. The folding roller 204 disposed rearward of the swinging shaft 205 has smaller diameter than that of the folding roller 203 which is disposed frontward of the swinging shaft 205.

Here, the bead portion of the carcass band K is fixed to the tire shaping drum 21 via the bead lock segments 44, 45, but steps are generated at the boundary between the bead lock segments 44, 45 and the carcass band K. Since the shape of the carcass band K which is filled with inner pressure varies depending on the size and structure of the tire to be produced, the folding fingers are required to work smoothly without reduction of speed or stopping due to the shape or steps of the carcass band K.

However, such a folding mechanism may tend to cause swinging of the swinging member 202 on a considerable scale depending on the shape and steps of the carcass band K. Thereby, according to the shape of the carcass band K and setting of thrusting pressure of the folding finger 201, wheelie (float up) of the folding roller 203 may happen, hence the rotating direction component of thrusting pressure of the folding roller 203 becomes small, which causes insufficient thrust. In addition, in case where the tire has a small bead width, boundary between the bead lock segment and the bead creates a gap and the folding roller 204 with small diameter gets into the gap, which can be a cause of speed reduction or stoppage of the folding finger.
Patent Document 1: JP 2001-293793 A

Further examples of a fire shaping apparatus that comprises a folding finger with two swingable folding rollers and swinging angle restriction members are disclosed in US 2007/0068631 A1 and JP 2004-268371 A.

### Disclosure of the Invention

### Problems to be solved by the invention

The present invention has been implemented in view of foregoing problems. A first object of the invention is to prevent wheelie of folding rollers fitted frontward of a swinging shaft in a tire shaping apparatus which is provided with a folding mechanism including two folding rollers fitted in a swingable manner to the folding fingers so as to hold deviated positions of a carcass band in a circumferential direction and in a meridian direction, a second object is to prevent the folding roller fitted rearward of the swinging shaft from getting into a gap at a boundary between a bead lock segment and a bead.

### Means to solve the problems

The invention according to claim 1 is a tire shaping apparatus comprising: a drum spindle; and a folding finger which swings between a closed position and an expanded open position with a swinging shaft provided on the drum spindle as a fulcrum, the apparatus, corresponding to swinging of the folding finger from the closed position to the expanded open position, folding an end portion of a carcass band, which is disposed outside of a circumference of the drum spindle and has been transformed into a toroidal-shape, by a folding roller fitted at a leading end of the folding finger, wherein the folding roller is fitted to a swinging member, which is supported on the folding finger in a swingable manner, in deviated positions left and right and front and rear of the swinging shaft so that contact positions at end portions of the carcass band are different with respect to meridian and axial directions, and a swinging angle restriction member is provided on the swinging member or the folding finger so as to restrict swinging of the folding roller fitted frontward of the swinging shaft within a predetermined angle in a direction that the folding roller moves away from the surface of the end portion of the carcass band.
The embodiment according to claim 2 is a tire shaping apparatus according to claim 1, wherein the folding roller fitted rearward of the swinging shaft has a smaller diameter than that of the folding roller fitted frontward of the swinging shaft, and the swinging member is bent in such a direction as a circumference surface of the folding roller fitted rearward of the swinging shaft is put closer to the surface of the end portion of the carcass band.

### [Function]

When the end portion of the carcass band which has been transformed into a toroidal-shape is folded by the folding rollers, as for the meridian direction, the folding roller fitted rearward of the swinging shaft holds the end portion of the carcass band, following the folding roller fitted frontward of the swinging shaft. At that time, swinging of the folding roller fitted frontward of the swinging shaft in a direction moving away from the surface of the end portion of the carcass band is restricted within the predetermined angle, and thereby swinging of the folding roller fitted rearward of the swinging shaft in a direction so as to get closer the surface of the end portion of the carcass band is restricted within the predetermined angle.

### Advantageous Effect of the invention

According to the present invention, owing to restriction of swinging of the folding roller fitted frontward of the swinging shaft in a direction moving away from the surface of the end portion of the carcass band, wheelie of the folding roller can be prevented, and at the same time the folding roller fitted rearward of the swinging shaft can be prevented from getting into a gap at a boundary between the bead lock segment and the bead.

### Brief Description of the Drawings

Fig. 1 shows a front view of a leading end portion of a folding mechanism in a tire shaping apparatus in an embodiment according to the present invention.
Fig. 2 shows movements path of folding rollers when a folding finger of Fig. 1 starts expanding and opening from a closed position.
Fig. 3 shows a front sectional view of a conventional tire shaping apparatus.
Fig. 4 shows a front sectional view of the vicinity of left side bead lock segment in the tire shaping apparatus of Fig. 3.
Fig. 5 shows a conventional folding mechanism capable of folding with even thrust condition through overlapping thrust positions.

### Description of the Reference Symbols

22: drum spindle, 107, 117: fulcrum, 301: folding finger, 302: swinging member, 303, 304: folding roller, 305: swinging shaft, 306: first swinging angle restriction member, K: carcass band Best Modes for Carrying Out the Invention

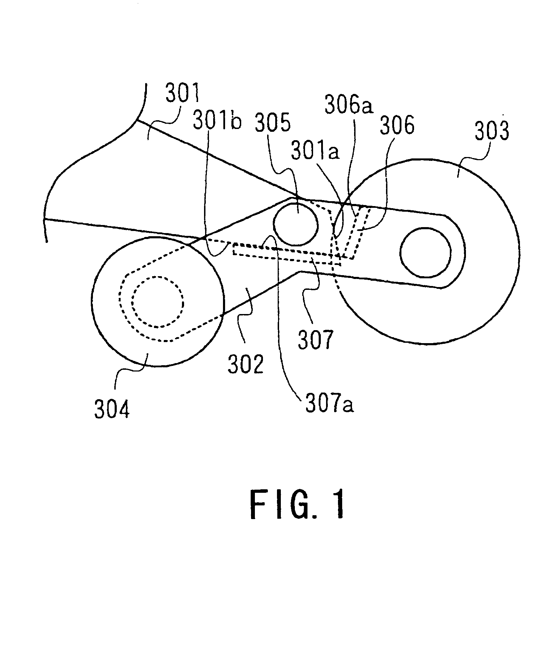

Hereinafter, an embodiment of the present invention will be described referring to drawings. Fig. 1 shows a front sectional view of a leading end portion of a folding mechanism in a tire shaping apparatus of an embodiment of the present invention. The entire structure of a shaping drum including a base end side of the folding mechanism is similar to that of a conventional apparatus. In other words, the folding mechanism is composed in such a way that a folding finger 301 is provided, which swings between a closed position and an expanded open position having a swinging shaft provided on a drum spindle (not shown) as a fulcrum, and responding to swinging of the folding finger 301 from the closed position to the expanded open position, the end portion of the carcass band disposed outside of circumference of the drum spindle, and configured to be a toroidal-shape, is folded by the folding rollers 303, 304 which are fitted at the leading end portion of the folding finger 301.

The folding mechanism of the present embodiment is provided with a folding finger 301 which extends inward in substantially axial direction of the drum spindle, and a swinging member 302 is supported in a swingable manner at the leading end portion of the folding finger 301 via the swinging shaft 305. The swinging member 302 has substantially a chevron-like shape in front view, and a swinging shaft 305 consisting of a swinging pin and the like is provided at the substantially central part thereof. The folding rollers 303, 304 are supported rotatably at the both end portions of the swinging member 302. Diameter of the folding roller 304 fitted rearward of the swinging shaft 305 is smaller than that of folding roller 303 fitted frontward of the swinging shaft 305.

The folding rollers 303, 304 are fitted with a similar positional relationship with the folding rollers 203, 204 of Fig. 5, sandwiching the swinging shaft 305. Therefore, when the folding finger 301 swings from the closed position to the expanded open position and the end portion of the carcass band K is folded by the folding rollers 303, 304, as for the meridian direction of the carcass band K, the folding roller 203 touches firstly the carcass band and as for the circumferential direction, respective parts of the contacting portion are overlapped.

On a rear surface of the substantially central part of the swinging member 302 (a surface where the leading end portion of the folding finger 301 and the folding roller 303 are provided), a first swinging angle restriction member 306 and a second swinging angle restriction member 307 are provided which are composed of linear projections. Here, the first swinging angle restriction member 306 and the second swinging angle restriction member 307 have function to restrict swinging angle of the swinging member 302 within the predetermined value (predetermined angle) in the direction of counterclockwise and clockwise in the drawing, respectively.

In other words, when the swinging member 302 rotates counterclockwise in the drawing by a predetermined angle, the front surface 306a in the rotating direction of the first swinging angle restriction member 306 abuts against the leading end surface 301a of the folding finger 301, and thereby further swinging is obstructed. When the swinging member 302 rotates clockwise in the drawing by a predetermined angle, the front surface 307a in the rotating direction of the second swinging angle restriction member 307 abuts against the lower surface 301b of the leading end portion of the folding finger 301, and thus further swinging is obstructed.

Here, counterclockwise rotation in the drawing is the direction in which the folding roller 303 comes away from and the folding roller 304 comes closer to the surface of the end portion of the carcass band K, which is an object to be folded. On the contrary, clockwise rotation is the direction in which the folding roller 303 comes closer to and the folding roller 304 comes away from the surface of the end portion of the carcass band K.

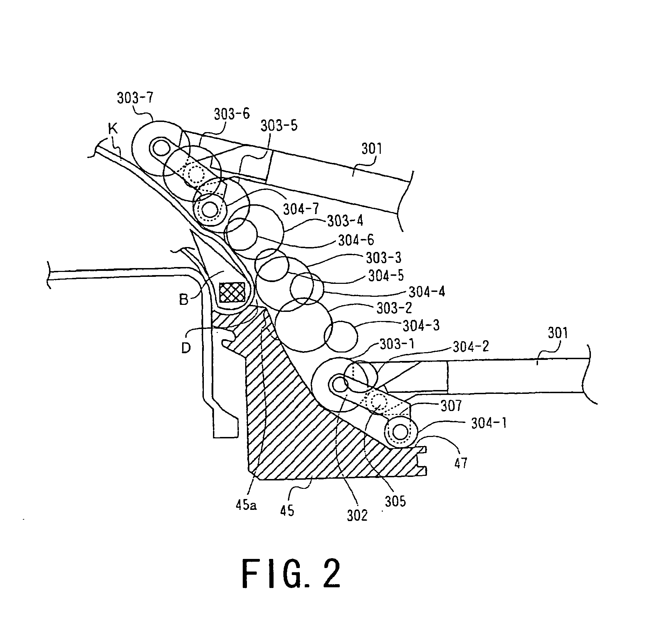

Operation of the folding mechanism which has foregoing constitution will be described referring to Fig. 2. Fig. 2 shows movement paths of the folding rollers 303 and 304 when the folding finger 301 starts expanding from the closed position. Here, referring to seven steps from the closing position to the seventh position, for convenience sake, the closed position and the seventh position give the total images of the leading end portion of the folding mechanism, and the positions from the second to the sixth give images of only folding roller itself. Further, a number (-1 to -7) corresponding to the step is added to each Reference Symbol.

At the closed position, the folding rollers 303 and 304 are in contact with the surface of the finger receiver 47 of the bead lock segment 45 (303-1, 304-1). When the folding finger 301 swings clockwise from this position, the folding roller 303 climbs a slope of the finger receiver 47, gets over a gap D between the bead lock segment and the bead B equipped with filler, and thus the end portion of the carcass band K is folded successively (303-2 to 303-7). At this time, since swinging angle of clockwise rotation of the folding roller 303 is restricted within the predetermined angle by the first swinging angle restriction member 306 (Fig. 1), regardless of a shape of the carcass band K and setting of thrust pressure of the folding finger 301, wheelie and deterioration of rotating force of the folding roller 303 are prevented, and thus insufficient thrust can be prevented.

Here, aforementioned predetermined angle, that is, the maximum swinging angle of clockwise rotation of the folding roller 303 will be described. In Fig. 2, while the folding roller 303 is thrusting the upper end portion 45a of the bead lock segment 45, swinging angle of clockwise rotation of the folding roller 303 becomes maximum. Therefore, aforementioned predetermined angle is set to be the swinging angle at which the folding roller 303 is thrusting the upper end portion 45a of the bead lock segment 45.

Meanwhile, the folding roller 304 climbs the slope of the finger receiver 47, just as following the folding roller 303, gets over the gap D between the bead lock segment and the bead B equipped with filler, and acts to fold the end portion of the carcass band K. Since swinging angle of clockwise rotation around the swinging shaft 302 is restricted by the first swinging angle restriction member 306 (Fig. 1), the folding roller 304 reaches the end portion of the carcass band K without contacting the slope of finger receiver 47 and the gap D between the slope and the bead B equipped with filler (304-2 to 304-6). Consequently, the folding roller 304 is never fitted in the gap D.

In that case, if the first swinging angle restriction member 306 is not provided and the folding roller 304 can rotate freely, clockwise rotating force in Fig. 2 is applied to the folding roller 304 without limitation. Under this condition, if there is a gap on the surface to be thrusted, the folding roller 304, the roller tends to get into the gap, and thus there is a potential risk where the folding roller 304 gets into the gap. However, since the first swinging angle restriction member 306 is provided, clockwise rotating force in Fig. 2 is restricted, and even if there is a gap, possibility of getting in there becomes small.

As described above, the swinging member 302 is bent substantially in chevron-shape in front view. Due to this, the circumferential surface of the folding roller 304 with smaller diameter can be closer to the surface of the end portion of the carcass band K (displaced in clockwise rotation) compared to the straight one like the swinging member 202 in Fig. 5, and therefore, the end portion of carcass band K can be held (304-7) even though the swinging angle in clockwise rotation around the swinging shaft 302 is restricted.

The second swinging angle restriction member 307 is effective when the folding finger 301 is in stored condition or when reusing after returning the closed position. That is to say, in the present embodiment, one of the two folding rollers has a smaller diameter than that of the other from the point of view of apparatus storage performance. Then, the thrust force of the folding roller and the maximum value of the swinging angle of the first swinging angle restriction member 306 are set with respect to the folding roller 303 with a large diameter, and whereby it is required to locate frontward the folding roller 303 with a larger diameter and locate rearward the folding roller 304 with a smaller diameter. However, if there is not provided the second swinging angle restriction member 307, the swinging member 302 comes to rotate substantially by 180 degree in clockwise direction , and thereby there is a potential risk of front and rear positions of the folding rollers 303 and 304 being reversed. However, due to provision of the second swinging angle restriction member 307, swinging angle of the swinging member 302 is restricted to prevent reversing of the front and rear positions of the folding rollers 303 and 304, and hence malfunction of repeated folding operations can be avoided.

By the way, although the first swinging angle restriction member 306 and the second swinging angle restriction member 307 are provided on the swinging member 302 in the above-described embodiment, these members may be provided on the folding finger 301.

## Claims

1. A tire shaping apparatus comprising: a drum spindle (22); and a folding finger (301) which swings between a closed position and an expanded open position with a swinging shaft (305) provided on the drum spindle as a fulcrum (107, 117), the apparatus, corresponding to swinging of the folding finger from the closed position to the expanded open position, folding an end portion of a carcass band (K), which is disposed outside of a circumference of the drum spindle and has been transformed into a toroidal-shape, by a folding roller (303, 304) fitted at a leading end of the folding finger, wherein the folding roller is fitted to a swinging member, which is supported on the folding finger in a swingable manner, in deviated positions left and right and front and rear of the swinging shaft so that contact positions at end portions of the carcass band are different with respect to meridian and axial directions, **characterised in that** a first swinging angle restriction member (306) and a second angle restriction member (307) which are composed of linear projections are provided on the swinging member (302) or the folding finger, the first swinging angle restriction member is provided so as to restrict swinging of the folding roller fitted frontward of the swinging shaft within a predetermined angle in a direction that the folding roller moves away from the surface of the end portion of the carcass band, the second swinging angle restriction member (307) is provided so as to restrict swinging of the folding roller fitted backward of the swinging shaft within a predetermined angle in a direction that the folding roller moves closer to the surface of the end portion of the carcass band; where the front surface in the rotating direction of the first swinging angle restriction member (306) abuts against the leading end surface of the folding finger (301a) and the front surface in the rotating direction of the second swinging angle restriction member (307) abuts against the lower surface of the leading end portion (301b) of the folding finger.

2. The tire shaping apparatus according to claim 1, wherein the folding roller fitted rearward of the swinging shaft has a smaller diameter than that of the folding roller fitted frontward of the swinging shaft, and the swinging member is bent in such a direction as a circumference surface of the folding roller fitted rearward of the swinging shaft is put closer to the surface of the end portion of the carcass band.

## Patentansprüche

1. Reifenformvorrichtung, die aufweist: eine Trommelspindel (22); und einen Faltfinger (301), der zwischen einer geschlossenen Position und einer expandierten offenen Position mit einer Schwingwelle (305) schwingt, die an der Trommelspindel als ein Drehpunkt (107, 117) vorhanden ist, wobei die Vorrichtung entsprechend dem Schwingen des Faltfingers aus der geschlossenen Position in die expandierte offene Position einen Endabschnitt eines Karkassenbandes (K), das außerhalb eines Umfanges der Trommelspindel angeordnet ist und in eine Ringform umgewandelt wurde, mittels einer Faltrolle (303, 304) faltet, die an einem vorderen Ende des Faltfingers angebracht ist, wobei die Faltrolle an einem Schwingelement angebracht ist, das am Faltfinger in einer schwingfähigen Weise in abgelenkten Positionen links und rechts und vorn und hinten von der Schwingwelle getragen wird, so dass die Kontaktpositionen an den Endabschnitten des Karkassenbandes mit Bezugnahme auf die Meridian- und axiale Richtung unterschiedlich sind, **dadurch gekennzeichnet, dass** ein erstes Schwingwinkelbegrenzungselement (306) und ein zweites Schwingwinkelbegrenzungselement (307), die aus linearen Vorsprüngen bestehen, am Schwingelement (302) oder dem Faltfinger vorhanden sind, wobei das erste Schwingwinkelbegrenzungselement so bereitgestellt wird, dass es das Schwingen der Faltrolle begrenzt, die nach vorn gerichtet von der Schwingwelle innerhalb eines vorgegebenen Winkels in einer Richtung angebracht ist, damit sich die Faltrolle weg von der Oberfläche des Endabschnittes des Karkassenbandes bewegt, wobei das zweite Schwingwinkelbegrenzungselement (307) so bereitgestellt wird, dass es das Schwingen der Faltrolle begrenzt, die nach hinten gerichtet von der Schwingwelle innerhalb eines vorgegebenen Winkels in einer Richtung angebracht ist, damit sich die Faltrolle näher zur Oberfläche des Endabschnittes des Karkassenbandes hin bewegt; wobei die vordere Fläche in der Rotationsrichtung des ersten Schwingwinkelbegrenzungselementes (306) an die vordere Endfläche des Faltfingers (301a) anstößt, und wobei die vordere Fläche in der Rotationsrichtung des zweiten Schwingwinkelbegrenzungselementes (307) an die untere Fläche des vorderen Endabschnittes (301b) des Faltfingers anstößt.

2. Reifenformvorrichtung nach Anspruch 1, bei der die Faltrolle, die nach hinten gerichtet von der Schwingwelle angebracht ist, einen kleineren Durchmesser aufweist als den der Faltrolle, die nach vorn gerichtet von der Schwingwelle angebracht ist, und wobei das Schwingelement in einer derartigen Richtung wie eine Umfangsfläche der Faltrolle gebogen ist, die nach hinten gerichtet von der Schwingwelle angebracht ist, näher angeordnet an der Oberfläche des Endabschnittes des Karkassenbandes.

## Revendications

1. Appareil de façonnage de bandages pneumatiques, comprenant : une broche de tambour (22) ; et un doigt de pliage (301), pivotant entre une position fermée et une position ouverte dilatée, un arbre pivotant (305) étant agencé sur la broche du tambour et servant de pivot (107, 117), l'appareil assurant, en fonction du pivotement du doigt de pliage de la position fermée vers la position ouverte dilatée, le pliage d'une partie d'extrémité d'une bande de carcasse (K), agencée à l'extérieur d'une circonférence de la broche du tambour et ayant été transformée en une forme toroïdale, par un rouleau de pliage (303, 304) ajusté au niveau d'une extrémité avant du doigt de pliage, le rouleau de pliage étant ajusté sur un élément pivotant, supporté de manière pivotante sur le doigt de pliage, dans des positions déviées, vers la gauche, la droite, et vers l'avant et l'arrière de l'arbre pivotant, de sorte que des positions de contact au niveau de parties d'extrémité de la bande de carcasse sont différentes en ce qui concerne les directions méridienne et axiale, **caractérisé en ce qu'**un premier élément de restriction de l'angle de pivotement (306) et un deuxième élément de restriction de l'angle de pivotement (307), composés de saillies linéaires, sont prévus sur l'élément pivotant (302) ou le doigt de pliage, le premier élément de restriction de l'angle de pivotement étant agencé de sorte à limiter le pivotement du rouleau de pliage ajusté vers l'avant de l'arbre pivotant, dans le cadre d'un angle prédéterminé, dans une direction dans laquelle le rouleau de pliage se déplace à l'écart de la surface de la partie d'extrémité de la bande de carcasse, le deuxième élément de restriction de l'angle de pivotement (307) étant destiné à limiter le pivotement du rouleau de pliage ajusté vers l'arrière de l'arbre pivotant, dans le cadre d'un angle prédéterminé, dans une direction dans laquelle le rouleau de pliage se rapproche de la surface de la partie d'extrémité de la bande de carcasse ;
la surface avant, dans la direction de rotation du premier élément de restriction de l'angle de pivotement (306), butant contre la surface d'extrémité avant du doigt de pliage (301a) et la surface avant, dans la direction de rotation du deuxième élément de restriction de l'angle de pivotement (307), butant contre la surface inférieure de la partie d'extrémité avant (301b) du doigt de pliage.

2. Appareil de façonnage de bandages pneumatiques selon la revendication 1, dans lequel le rouleau de pliage ajusté vers l'arrière de l'arbre pivotant a un diamètre inférieur à celui du rouleau de pliage ajusté vers l'avant de l'arbre pivotant, l'élément pivotant étant fléchi dans une direction telle qu'une surface de la circonférence du rouleau de pliage ajusté vers l'arrière de l'arbre pivotant est plus proche de la surface de la partie d'extrémité de la bande de carcasse
